# EUROPEAN PATENT APPLICATION

(11) **EP 2 451 047 A1**
(43) Date of publication of application: **09.05.2012**
(21) Application number: 10189980.5
(22) Date of filing: 04.11.2010
(51) Int. Cl.: H02K 1/18, H02K 1/20, H02K 9/19, H02K 3/50

(54) **Water cooled electric machine**

(71) Applicant: Siemens Aktiengesellschaft, 80333 München (DE)
(72) Inventor: Besnerais, Jean Le, 7330 Brande (DK)

(57) **Abstract**

The invention relates to a plate (100) for tightening a stator housing segment (110) of an electric machine, in particular a generator of a wind turbine. The plate (100) is mountable to an axial front face (112) of the stator housing segment (110). The plate (100) comprises a fluid channel (101) which is formed in such a way that, when the plate (100) is attached to the axial front face (112) of the stator housing segment (110), the fluid channel (101) connects an opening of a cooling channel (111) within the stator housing segment (110) with a supply system (120) for cooling fluid.

## Description

### Field of invention

The present invention relates to a plate for tightening a stator housing segment of an electric machine, in particular a generator of a wind turbine. Furthermore, the present invention relates to a method for tightening a stator housing segment of an electric machine, in particular a generator of a wind turbine.

### Art Background

In electric machines, such as in generators for wind turbines, heat is generated when transferring mechanical energy in electrical energy and vice versa. The heat is generated in the copper conductors that form the windings of the stator by Joule losses. The generated heat has to be removed in order to avoid hotspots and insulation wearing.

The stator housing and the attached windings are generally cooled by blowing air inside the stator. In axial end sections of the stator housings the windings protrude and from a half loop. The protruding half loops of the windings form the end windings of the stator windings. The stator windings are cooled by blowing air through the windings, for example in an air gap between rotor and stator or through radial extending ducts of the stator housing. It is also known to attach cooling pipes or hollow copper strains to the stator housing in order to provide a liquid cooling. The conductor sections of the windings that are attached to the stator housing are thereby cooled.

At a front face of the stator, a pressure plate for tightening a stator lamination of the stator housing is attached. Additionally, a connection for cooling fluid has to be mounted to the stator housing, without affecting the tightening force of the pressure plate.

WO 2007/090803 A1 discloses a cooling device for an electric machine. A stator consists of a plurality of core sheets that are tightened together, so that a lamination bundle of the stator is formed. Each core sheet comprises axial channelled recesses and grooves in order to support cooling pipes and stator windings.

DE 25 15 340 A1 discloses a stator housing of an electric machine in which grooves are formed for holding the windings. The stator housing comprises a cooling channel.

JP 56068242 A discloses a water-cooled stator for an electric machine wherein a cooling tube made of an insulator is inserted into a cooling hole that passes through a stator housing.

EP 1 168 571 A discloses a stator housing with a plurality of winding slots. The windings comprise an internal conduit for circulating a coolant through the conduit.

EP 1 499 001 A1 discloses a stator housing comprising an axial extending cooling channel that may be connected to an external cooling device.

### Summary of the Invention

It is an object of the present invention to provide a water-cooled stator housing with a proper cooling connection.

This object is solved by a plate for tightening a stator housing segment of an electric machine, in particular a generator of a wind turbine and by a method for tightening a stator housing segment of an electric machine, in particular of a generator of the wind turbine according to the independent claims.

According to a first aspect of the present invention a plate for tightening a stator housing segment of an electric machine, in particular a generator of the wind turbine, is presented. The plate is mountable to an axial front face of the stator housing segment. The plate comprises a fluid channel which is formed in such a way that, when the plate is attached to the axial front face of the stator housing segment, the fluid channel connects an opening of a cooling channel within the stator housing segment with the supply system for cooling fluid.

According to a further aspect of the present invention a method for tightening the stator housing segment of an electric machine, in particular a generator of a wind turbine is presented. According to the method, a plate, in particular an above-described plate, is mounted to an axial front face of the stator housing segment. In particular, the plate comprises a fluid channel which is formed in such a way that the fluid channel connects an opening of a cooling channel within a stator housing segment with a supply system for cooling fluid.

Moreover, the present invention relates to a stator system for an electric machine, in particular a generator of a wind turbine. The stator system comprises a housing segment with a cooling channel which comprises an opening at an axial front face of the stator housing segment. The stator system further comprises a supply system for supplying (i.e. feeding, draining) the cooling fluid to the cooling channel. Furthermore, the stator system comprises a plate as described above, wherein the plate is mounted to the axial front face of the housing segment, such that the fluid channel of the plate connects the opening with the supply system.

The stator housing segment forms an individual segment or a complete housing of a stator of a generator. If the housing segment is a segment of the stator housing, a plurality of housing segments are attachable to one another in order to form the stator housing, i.e. the stator stack. The housing segments of the stator extend around a shaft of a rotor of the electric machine. Hence, the housing segments may comprise a circular, curved extension in circumferential direction with respect to the shaft. Moreover, the housing segments comprise a longitudinal direction, wherein the longitudinal direction is parallel to the axial direction of the shaft. The housing segment may comprise a plurality of sheet elements which are fixed together along the axial direction such that a stator lamination is formed. The stator lamination forms the housing segment. The sheets are electrically isolated between each other in order to prevent eddy current.

The stator housing segment comprises at its edges in axial direction with respect to the shaft axial front faces. To the axial front faces a respective plate (also called pressure plate or finger plate) is mounted. The plate mounted to a respective axial front face may be connected by a beam to a further plate mounted to a further axial front face of the stator housing element which is located opposed to the front face in axial direction. Hence, both plates may be tightened together along the axial direction such that the plates clamp together the stator housing segment, i.e. the sheets of the stator housing segment. In other words, the plates reinforce and tighten the stator housing segment.

The stator housing segment further comprises an inner surface and an outer surface, wherein the inner surface is located closer to the shaft in radial direction than the outer surface.

The windings of the stator are in general attached to the inner or outer surface of the stator housing segment. For example, the windings may be attached to slots which are formed in the inner or outer surface, wherein the slots have a run generally along the axial direction of the shaft.

The supply system may comprise external devices of the electric machine, such as a cooling fluid pump and/or a cooling fluid reservoir. Moreover, the supply system comprises supply channels that supply the cooling fluid to or from the stator housing segment. The supply channels may be attached separately to the stator housing segment or may be integrally formed in the stator housing segment. In other words, the stator housing segment may comprise an integral supply channel that guides the cooling fluid.

According to the present invention, the plates further comprises an (integrated) fluid channel for connecting a cooling channel of the stator housing segment with a supply system for supplying (i.e. feeding and/or draining) cooling fluid. Hence, for connecting the supply system, no further elements and complex constructions are necessary. The plates according to the present invention combine both functions, namely the clamping of the stator housing segment and the connection of the cooling channel of the stator housing segment to the supply system.

Hence, a proper stator assembly is provided. Additionally, a welding connection between a conventional manifold and a stator housing segment may be obsolete, so that the whole assembly system may be more reliable. Usually, the plate is used to assemble the lamination of the sheets of the stator segment together by aid of welded longitudinal bars for keeping a high axial pressure to prevent any deflection of the assembly when submitted to vibration and thermal stress. According to the present invention, the plate is further used additionally as a manifold, i.e. as a connection for cooling fluid.

According to a further exemplary embodiment, the fluid channel is formed by a groove along the plate. The groove may be milled or punched into a face of the plate, so that the groove comprises an open side. The plate is attachable to the axial front face of the stator housing segment in such a way, that the open side of the groove is covered by the axial front face of the stator segment, when the plate is attached to the axial front face. Between the plate and the front face of the stator housing segment an insulation layer, such as resin or rubber, may be interposed in order to seal the interfaces between the cooling channel and the fluid channel and furthermore e.g. to seal the interfaces between the fluid channel and the supply system.

According to a further exemplary embodiment, the fluid channel is formed by a borehole within the plate. Hence, at the input and the output of the bore hole the supply system and/or the cooling channel may be attached.

According to a further exemplary embodiment, the fluid channel is formed in such a way that, when the plate is mounted to the axial front face of the stator housing segment, the fluid channel connects a further opening of a further cooling channel within the stator housing segment with the supply system for cooling fluid.

By the present exemplary embodiments, the fluid channel may comprise a plurality of intersections and sub-fluid channels, so that at one end of the fluid channel a cooling fluid may be fed or drained from or to the supply system and at another input or output, the cooling fluid is fed to or drained off from a cooling channel and/or a further cooling channel of the stator housing segment. Hence, if the stator housing segment comprises a plurality of cooling channels, each cooling channel may be connected to a respective (sub-) fluid channel and to the supply system by one plate element comprising one fluid channel with a plurality of sub-fluid channels.

According to a further exemplary embodiment, the plate comprises a further fluid channel. When the plate is mounted to the axial front face of the stator housing segment, the fluid channel is formed for connecting the opening of a cooling channel with a first supply channel of the supply system and the further fluid channel is formed for connecting the further opening of the further cooling channel with the second supply channel of a supply system.

As described above, the supply system may comprise first and second supply channels that are integrated into the stator housing segment and that run for example in axial direction within the stator housing segment. For example, the supply channels may run along or within an inner surface of the stator housing segment and the cooling channel runs along an outer surface of the housing segment. Hence, the plate functions as a manifold or bend, wherein the fluid channel is formed as a curved channel, which connects the inner supply channel with the outer cooling fluid channel at an axial front face of the stator housing segment.

According to a further exemplary embodiment, the plate further comprises a protrusion (also called fin) which is formed in such a way that the stator winding of the stator is supportable by the protrusion, when the plate is mounted to the axial front face of the stator housing segment. At the axial front face of the stator housing segment, the windings attached to a surface of the stator housing segment exits the stator housing segment in axial direction, run along a 180° degree curve (half loop) and run back to the stator housing segment. The sections of the stator windings which are not in physical contact with the stator housing segment may be called end windings. Because the end windings are not in physical contact with the stator housing segment, an insufficient cooling due to the decoupling to the water cooling system inside the stator housing segment may occur. Hence, the protrusion (fin) of the plate supports (touches) at least partially the end windings, so that the length of the end windings which is not water-cooled is reduced. In particular, the protrusions comprise a shape that forms and simulates the run of the end windings, so that the protrusions increase the area of physical contact with the end windings. Hence, an improved fluid (water) cooling is achieved by forming protrusions to the plate.

According to a further exemplary embodiment, the stator system further comprises a stator winding as described above. The housing segment comprises a slot, wherein the stator winding is inserted in the slot.

According to a further exemplary embodiment, the plate comprises the above-described protrusion, which is formed in such a way, that the stator winding is supported by the protrusion.

According to a further exemplary embodiment, the stator system comprises a further plate. A cooling channel of the stator housing segment may comprise a further opening at a further axial front face of the stator housing segment. The further plate is mounted to the further axial front face of the housing segment such that the fluid channel of the plate connects the further opening with the supply system.

In particular, according to a further exemplary embodiment, the stator system further comprises a beam extending parallel to the shaft which is fixed to the plate and the further plate (e.g. by welding or gluing). The housing segment is mounted to the beam such that the housing segment is reinforced and tightened by the beam. In particular, the stator housing segment is clamped between the plate and the further plate. In other words, a bar clamp for reinforcing the stator housing segment may be formed by the plate, the further plate and the beam.

According to further exemplary embodiment, the housing segment comprises a plurality of the sheet elements. The sheet elements may be supplied by the beam. The plate and the further plate are fixed to the beam such that the sheet elements are tightened together between the plate and the further plate for generating a stator housing lamination of the housing segment. In particular, each sheet element comprises a hole, wherein when tightening the sheet elements together in axial direction, the holes of the sheet elements form the cooling channel and/or the supply channels of the supply system.

According to a further exemplary embodiment, the stator system comprises a further stator housing segment. The plate is further mounted to an axial front face of the further housing segment. According to the exemplary embodiment, in circumferential direction around the shaft of the rotor of the electric machine, a plurality of stator housing segments are attached to each other in order to form the stator housing. A plate according to the present invention may be mounted to a plurality of stator housing segments and may connect the supply system with cooling channels of the respective stator housing segments. Hence, without any additional elements, such as additional manifolds and separated pressure plates, a fixation and tightening of the plurality of stator housing segments is achieved. Additionally a plurality of stator housing segments may be connected to a supply system for a cooling fluid by a common fluid channel of the plate. Hence, a simplified stator housing may be manufactured with a reduced amount of required parts. For the reinforcement of the stator housing segment and for the cooling fluid connection one and the same plate is usable.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 illustrates a schematic view of a stator housing system with a plate according to an exemplary embodiment of the present invention,
Fig. 2 illustrates a stator housing system comprising a plate with protrusions according to an exemplary embodiment of the present invention,
Fig. 3 illustrates a schematic view of an axial front face of a housing segment according to an exemplary embodiment of the present invention, and
Fig. 4 illustrates a schematic view of a front face of a plate according to an exemplary embodiment of the present invention.

### Detailed Description

The illustrations in the drawings are schematical. It is noted that in different figures, similar or identical elements are provided with the same reference signs.

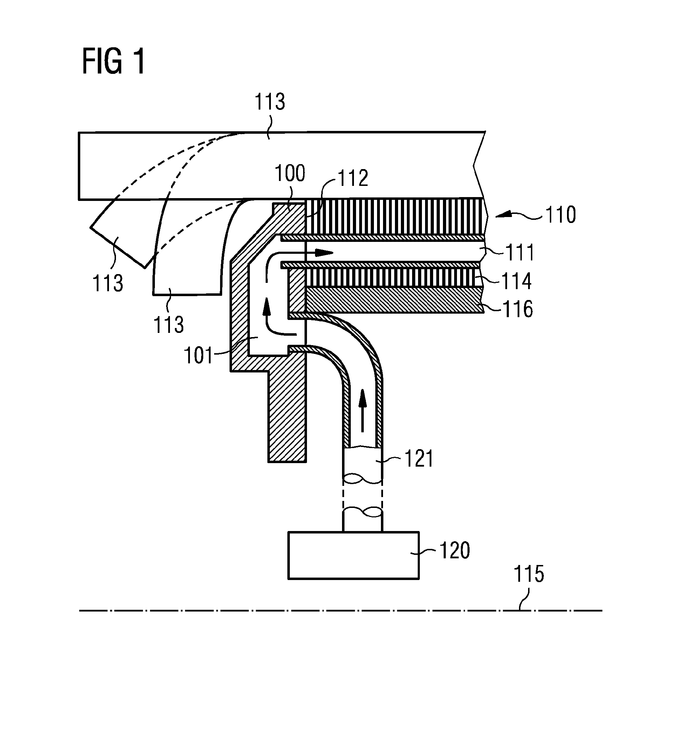

**Fig. 1** illustrates a stator system for an electric machine, in particular a generator of a wind turbine. The stator system comprises a housing segment 110 with a cooling channel 111 which comprises an opening at an axial front face 112 of the stator housing segment 110. Moreover, the stator system comprises a supply system 120 for supplying cooling fluid to the cooling channel 111.

Moreover, the stator system comprises a plate 100. The plate 100 is mounted to the axial front face 112 of the housing segment 110. A fluid channel 101 of the plate 100 connects an opening of the cooling channel 111 with the supply system 120.

In Fig. 1, a shaft 115 of a rotor of the electric machine is shown. The electric machine may be a generator or an electro-motor, for example. The shaft 115 comprises an axial direction and a radial direction.

The axial front face 112 of the stator housing segment 110 defines the face of the stator housing segment 110 that defines the respective axial front end of the housing segment 110 with respect to the axial direction of the shaft 115.

The plate 100 is mounted to the axial front face 112. The plate 100 is adapted for reinforcing and tightening the stator housing segment 110 and additionally adapted for functioning as a manifold for guiding a cooling fluid from the supply system 120 to the cooling channel 111 of the stator housing segment 110 and vice versa.

The supply system 120 may be located at a spaced location with respect to the housing segment 110. A connection tube, i.e. a first supply channel 121, may connect e.g. a cooling fluid reservoir of the supply system 120 with a fluid channel 101 of the plate 100.

For tightening the housing segment 110, the plate 100 may be mounted to a beam 116 which runs in particular in axial direction. The plate 100 may for example be welded to the beam 116. At an opposed axial front face of the housing segment (not shown in Fig. 1), a further plate may be attached. The further plate may also be fixed to the beam 116, so that a clamping of the stator housing segment 110 by the plate 100 and the further plate is enabled.

The stator housing segment 110 may comprise a plurality of sheet elements 114 that are attached to each other in axial direction. The sheet elements 114 may be electrically isolated from each other in order to prevent eddy currents. To a surface of the housing segment 110, windings 113 are attached. As indicated in Fig. 1, the windings 113 run in axial direction and exit at the axial front face 112 the housing segment 110. After running a half loop (180° degree curve) the windings 113 enter the housing segment 110 again.

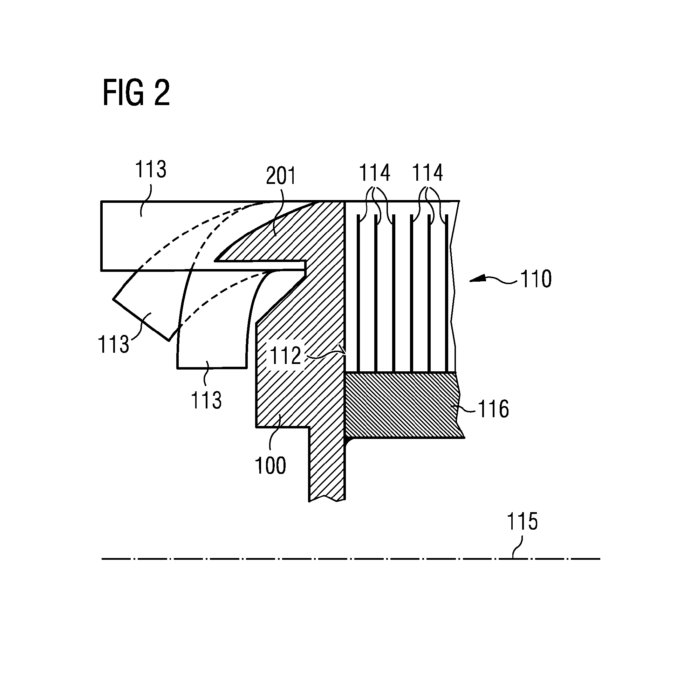

**Fig. 2** illustrates the exemplary embodiment shown in Fig. 1, wherein the plate 100 comprises a protrusion 201, also called fin. The windings 113 that exit the housing segment 110 may be supported and may be in physical contact with the protrusion 201, so that the thermal contact between the windings 113 and the housing segment 110 respectively the plate 100 is improved. Hence, an improved cooling of the stator windings 113 is achieved.

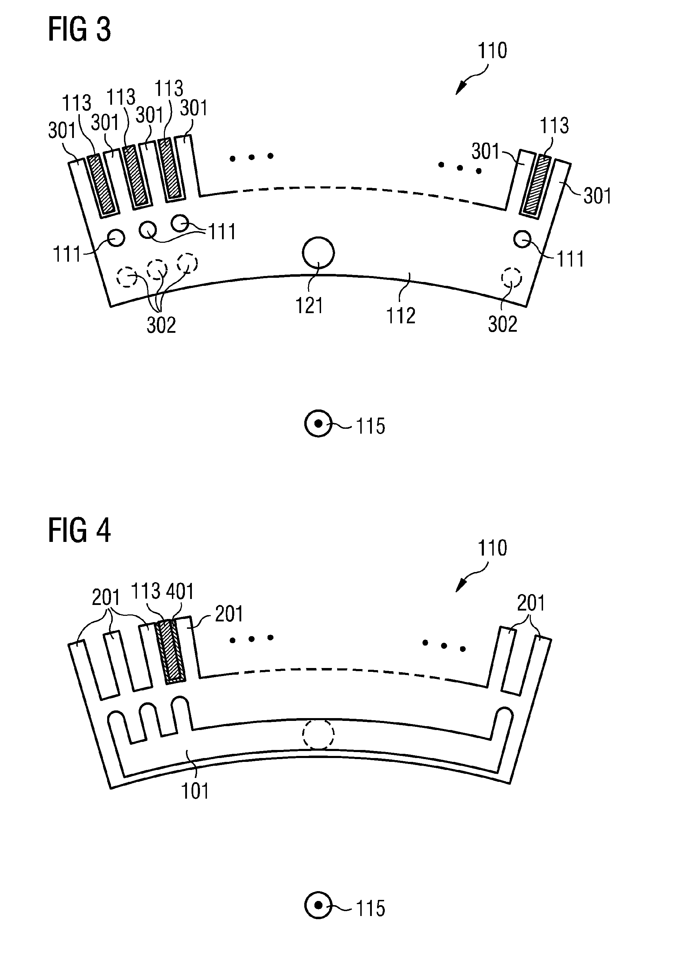

**Fig. 3** shows a front view of the housing segment 110. In Fig. 3, the axial front face 112 is shown. At a radial outer surface of the stator housing segment 110 slots 301 are shown, wherein in each slot 301 a respective winding 113 is attached. In the vicinity of the slots 301 and the windings 113, the cooling channels 111 are formed, so that a proper thermal contact between the cooling fluid in the cooling channel 111 and the windings 113 is achieved. In the exemplary embodiment shown in Fig. 3, the first supply channel 121 of the supply system is integrally formed inside the housing segment 110. The first supply channel 121 may act as a main supply line for guiding the cooling fluid to the cooling channels 111 or for guiding the cooling fluid away from the cooling channels 111. Additionally, inside the housing segment 110 a plurality of further second supply channels 302 may be formed.

**Fig. 4** shows a front view of the plate 100, wherein the plate 100 in Fig. 4 is designed to be attached to the axial front face 112 of the housing segment 110 shown in Fig. 3.

As can be taken from Fig. 4, the plate 100 comprises the fluid channel 101 which may be for example a groove milled to a surface of the plate 100. The fluid channel 101 may comprise a plurality of intersections and sub-channels such that the cooling fluid may be distributed between the first and second supply channels 121, 302 and the respective cooling channels 111.

As further shown in Fig. 4, the plate 100 comprises the protrusions 201, wherein parts of the winding 113, in particular the end winding parts, are attached. Between the windings 113 and the protrusions 201 a thermal paste 401 may be attached in order to improve the thermal connection between the plate 100 and the windings 113.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Plate (100) for tightening a stator housing segment (110) of an electric machine, in particular a generator of a wind turbine, wherein the plate (100) is mountable to an axial front face (112) of the stator housing segment (110), the plate (100) comprising,
a fluid channel (101) which is formed in such a way that, when the plate (100) is attached to the axial front face (112) of the stator housing segment (110), the fluid channel (101) connects an opening of a cooling channel (111) within the stator housing segment (110) with a supply system (120) for cooling fluid.

2. Plate (100) according to claim 1,
wherein the fluid channel (101) is formed by a groove along the plate (100).

3. Plate (100) according to claim 1,
wherein the fluid channel (101) is formed by a borehole within the plate (100).

4. Plate (100) according to one of the claims 1 to 3,
wherein fluid channel (101) is formed in such a way that, when the plate (100) is mounted to the axial front face (112) of the stator housing segment (110), the fluid channel (101) connects a further opening of a further cooling channel (111) within the stator housing segment (110) with the supply system (120) for cooling fluid.

5. Plate (100) according to claim 4, further comprising a further fluid channel,
wherein, when the plate (100) is mounted to the axial front face (112) of the stator housing segment (110),
the fluid channel (101) is formed for connecting the opening with a first supply channel (121) of the supply system (120) and
the further fluid channel is formed for connecting the further opening with a second supply channel (302) of the supply system (120).

6. Plate (100) according to one of the claims 1 to 5, further comprising
a protrusion (201) which is formed in such a way that a stator winding (113) of the stator is supportable, when the plate (100) is mounted to the axial front face (112) of the stator housing segment (110).

7. Stator system for an electric machine, in particular a generator of a wind turbine, the stator system comprising
a stator housing segment (110) with a cooling channel (111) which comprises an opening at an axial front face (112) of the stator housing segment (110),
a supply system (120) for supplying cooling fluid to the cooling channel (111), and
a plate (100) according to one of the claims 1 to 6, wherein the plate (100) is mounted to the axial front face (112) of the stator housing segment (110), such that the fluid channel (101) of the plate (100) connects the opening with the supply system (120).

8. Stator system according to claim 7, further comprising a stator winding (113),
wherein the stator housing segment (110) comprises a slot (301),
wherein the stator winding (113) is inserted in the slot (301).

9. Stator system according to claim 8,
wherein the plate (100) comprises a protrusion (201) which is formed in such a way that the stator winding (113) is supported by the protrusion (201).

10. Stator system according to one of the claims 7 to 9, further comprising
a further plate according to one of the claims 1 to 6, wherein the cooling channel (111) comprises a further opening at a further axial front face (112) of the stator housing segment (110),
wherein the further plate is mounted to the further axial front face (112) of the stator housing segment (110) such that the fluid channel (101) of the plate (100) connects the further opening with the supply system (120).

11. Stator system according to claim 10, further comprising
a beam (116) which is fixed to the plate (100) and the further plate,
wherein the stator housing segment (110) is mounted to the beam (116) such that the stator housing segment (110) is reinforced by the beam (116).

12. Stator system according to claim 11,
wherein the stator housing segment (110) comprises a plurality of sheet elements (114),
wherein the sheet elements (114) are in mechanical contact to the beam (116),
wherein the plate (100) and the further plate are fixed to the beam (116) such that the sheet elements (114) are tightened together by the plate (100) and the further plate for generating a stator housing lamination of the stator housing segment (110).

13. Stator system according to one of the claims 7 to 12, further comprising
a further stator housing segment (110),
wherein the plate (100) is further mounted to an axial front face (112) of the further stator housing segment (110).

14. Method for tightening a stator housing segment (110) of an electric machine, in particular a generator of a wind turbine, the method comprising
mounting a plate (100), in particular a plate (100) as set forth in one of the claims 1 to 6, to an axial front face (112) of the stator housing segment (110), wherein the plate (100) comprises a fluid channel (101) which is formed in such a way that the fluid channel (101) connects an opening of a cooling channel (111) within the stator housing segment (110) with a supply system (120) for cooling fluid.

## Amended claims

### Amended claims in accordance with Rule 137(2) EPC.

**1.** Plate (100) for tightening a stator housing segment (110) of an electric machine, in particular a generator of a wind turbine, wherein the plate (100) is mountable to an axial front face (112) of the stator housing segment (110), wherein a fluid channel (101) is formed by a groove along the plate (100),
wherein the groove is formed in such a way that, when the plate (100) is attached to the axial front face (112) of the stator housing segment (110), the fluid channel (101) connects an opening of a cooling channel (111) within the stator housing segment (110) with a supply system (120) for cooling fluid.

**2.** Plate (100) according to claim 1 , further comprising
a protrusion (201) which is formed in such a way that a stator winding (113) of the stator is supportable, when the plate (100) is mounted to the axial front face (112) of the stator housing segment (110).

**3.** Stator system for an electric machine, in particular a generator of a wind turbine, the stator system comprising
a stator housing segment (110) with a cooling channel (111) which comprises an opening at an axial front face (112) of the stator housing segment (110),
a supply system (120) for supplying cooling fluid to the cooling channel (111), and
a plate (100) according to claim 1 or 2,
wherein the plate (100) is mounted to the axial front face (112) of the stator housing segment (110), such that the fluid channel (101) of the plate (100) connects the opening with the supply system (120).

**4.** Stator system according to claim 3, further comprising
a stator winding (113),
wherein the stator housing segment (110) comprises a slot (301),
wherein the stator winding (113) is inserted in the slot (301).

**5.** Stator system according to claim 4,
wherein the plate (100) comprises a protrusion (201) which is formed in such a way that the stator winding (113) is supported by the protrusion (201).

**6.** Stator system according to one of the claims 3 to 5, further comprising
a further plate according to claim 1 or 2,
wherein the cooling channel (111) comprises a further opening at a further axial front face of the stator housing segment (110), wherein the further axial front face is an opposed axial front face with respect to the axial front face (112),
wherein the further plate is mounted to the further axial front face of the stator housing segment (110) such that the fluid channel (101) of the plate (100) connects the further opening with the supply system (120).

**7.** Stator system according to claim 6, further comprising
a beam (116) which is fixed to the plate (100) and the further plate,
wherein the stator housing segment (110) is mounted to the beam (116) such that the stator housing segment (110) is reinforced by the beam (116).

**8.** Stator system according to claim 7,
wherein the stator housing segment (110) comprises a plurality of sheet elements (114),
wherein the sheet elements (114) are in mechanical contact to the beam (116),
wherein the plate (100) and the further plate are fixed to the beam (116) such that the sheet elements (114) are tightened together by the plate (100) and the further plate for generating a stator housing lamination of the stator housing segment (110).

**9.** Stator system according to one of the claims 3 to 8, further comprising
a further stator housing segment (110),
wherein the stator housing segment (110) and the further stator housing segment (110) are attached to each other along a circumferential direction of the electrical machine,
wherein the plate (100) is further mounted to an axial front face (112) of the further stator housing segment (110).

**10.** Method for mounting a plate (100) according to claim 1 or 2 to an axial front face (112) of a stator housing segment (110) of an electric machine.
